# EUROPÄISCHE PATENTSCHRIFT

(11) **EP 2 902 674 B1**
(45) Veröffentlichungstag und Bekanntmachung des Hinweises auf die Patenterteilung: **07.10.2020**
(21) Anmeldenummer: 15153299.1
(22) Anmeldetag: 30.01.2015
(51) Int. Cl.: F16H 61/26, F16H 61/24

(54) **Kraftübertragungsvorrichtung für ein Getriebe**
Power transmission device for a transmission
Dispositif de transmission de force pour un engrenage

(30) Priorität: 31.01.2014 DE 102014101189
(43) Veröffentlichungstag der Anmeldung: 05.08.2015
(73) Patentinhaber: HS Products Engineering GmbH, 82216 Maisach (DE)
(72) Erfinder: Dorschel, Florian, 82211 Herrsching (DE); Heckmayr, Thomas, 86871 Rammingen (DE); Julling, Ullrich, 83209 Prien (DE); Specht, Martin, 82340 Feldafing (DE)
(74) Vertreter: Patentanwälte Bals & Vogel

(56) Entgegenhaltungen:
- EP-A2- 2 674 354
- DE-A1-102012 209 963
- DE-B3-102011 052 494
- DE-U1- 29 812 605

## Beschreibung

Die vorliegende Erfindung betrifft eine Kraftübertragungsvorrichtung für ein Getriebe, insbesondere eines Motorrades, mit einem Schaltassistenzsystem sowie ein Verfahren für die Montage einer derartigen Kraftübertragungsvorrichtung.

Es ist bekannt, dass Fahrzeuge, insbesondere Motorräder, mit Schaltassistenzsystemen ausgestattet werden. Ein Schaltassistenzsystem ist dahingehend zu verstehen, dass es den Schaltvorgang zwischen zwei Gängen für das Fahrzeug unterstützt. Beispielsweise kann bei der Anwendung eines Schaltassistenzsystems für ein Motorrad der Schaltwunsch erkannt und für eine Schaltvorbereitung verwendet werden. Eine derartige Vorbereitung zielt zum Beispiel auf die Synchronisation der Getrieberäder der zu schaltenden Gänge ab. Dies kann soweit führen, dass auf Basis dieser Synchronisation der zu schaltenden Gänge aus geometrischer Sicht ein Kuppelvorgang bei diesem Schaltvorgang unterbleiben kann. So kann ein Schaltassistenzsystem den Komfort beim Führen eines Fahrzeugs, insbesondere eines Motorrades, deutlich verbessern. Durch die Möglichkeit des Synchronisierens erlaubt das Schaltassistenzsystem weiter, dass ein Verschleiß innerhalb des Getriebes, insbesondere entsprechender Synchronisationsmittel, reduziert wird oder sogar minimiert wird. Selbstverständlich kann ein solches Schaltassistenzsystem auch bei Getrieben ohne Synchronisationsmöglichkeit eingesetzt werden. Um ein Schaltassistenzsystem in bekannter Weise betreiben zu können, ist als Eingangsparameter ein Schaltwunsch des Fahrers notwendig. Dieser ist mit möglichst hoher Sicherheit zu detektieren und insbesondere zu unterscheiden hinsichtlich eines Wunsches für ein Heraufschalten und hinsichtlich eines Wunsches für ein Herabschalten. Je nach Schaltwunschrichtung wird dementsprechend durch das Schaltassistenzsystem zum Beispiel eine Beschleunigung oder ein Abbremsen der aktuellen Motorleistung für einen kurzen Zeitraum gewährleistet. Weiter ist sicherzustellen, dass noch vor Durchführung des tatsächlichen Schaltvorganges der entsprechende Schaltwunsch an das Schaltassistenzsystem übermittelt werden könnte.

Bei bekannten Lösungen wird der Schaltwunsch zum Beispiel durch Federsysteme detektiert. Diese befinden sich üblicherweise zwischen dem Schalthebel beziehungsweise der Schalthebelvorrichtung und dem Getriebe. Solche Federvorrichtungen erlauben Relativbewegungen, welche am Schalthebelausgang relativ zum Getriebeeingang erfolgen können. Nachteilhaft bei diesen Lösungen ist es, dass diese zusätzlichen Bauteile bereits bei der Herstellung und Konstruktion des Fahrzeugs berücksichtigt und eingebaut werden müssen. Ein Nachrüsten einer derartigen Systematik ist nicht möglich. Neben dieser Grundproblematik ist zusätzlicher Platzbedarf für solche Schaltassistenzsysteme, beziehungsweise diese Schaltwunscherkennung, notwendig. Ein solcher Platzbedarf ist insbesondere bei Fahrzeugen in Form von Motorrädern nur selten gegeben und muss explizit durch entsprechende Konstruktion geschaffen werden. Neben dem Platzbedarf sind auch zusätzliche Kosten durch dieses zusätzliche Bauteilsystem sowie entsprechendes zusätzliches Gewicht ein großer Nachteil bekannter Lösungen.

Das Dokument EP 2 6 74 354 A2 betrifft eine Schaltvorrichtung für ein Motorrad. Die Schalteinrichtung weist hierbei ein Eingangselement auf, in welchem ein mit einer Schaltwelle gekoppeltes Ausgangselement angeordnet ist. Neben einem Kraftspeicher ist diese Vorrichtung auch mit einer Sensorvorrichtung ausgestattet.

Es ist Aufgabe der vorliegenden Erfindung, die voranstehend beschriebenen Nachteile zumindest teilweise zu beheben. Insbesondere ist es Aufgabe der vorliegenden Erfindung, einen Schaltwunsch zu detektieren bei reduziertem Platzbedarf und/oder geringerem Gewicht und bevorzugt bei gegebener Nachrüstbarkeit.

Voranstehende Aufgabe wird gelöst durch eine Kraftübertragungsvorrichtung mit den Merkmalen des Anspruchs 1 und ein Verfahren mit den Merkmalen des Anspruchs 17. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Kraftübertragungsvorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Eine erfindungsgemäße Kraftübertragungsvorrichtung für ein Getriebe, insbesondere eines Motorrades, mit einem Schaltassistenzsystem weist eine Schalthebelvorrichtung mit einer Lagervorrichtung für die bewegbare Lagerung an einem Fahrzeug auf. Eine erfindungsgemäße Kraftübertragungsvorrichtung zeichnet sich dadurch aus, dass die Schalthebelvorrichtung einen Schalthebelanschluss für die Aufnahme einer Schaltkraft, einen sich entlang einer zweiten Längsachse erstreckenden Schalthebel für die Weiterleitung der Schaltkraft und einen Getriebeanschluss für die Abgabe der Schaltkraft an das Getriebe aufweist. Dabei weist der Schalthebel einen Kraftspeicher für die Zwischenspeicherung wenigstens eines Teils der Schaltkraft auf, so dass eine Relativbewegung zwischen dem Schalthebelanschluss und dem Getriebeanschluss unter Änderung der im Kraftspeicher gespeicherten Schaltkraft erfolgen kann. Weiter ist für die Schalthebelvorrichtung eine Sensorvorrichtung vorgesehen für die Erkennung der Relativbewegung zwischen dem Schalthebelanschluss und dem Getriebeanschluss.

Erfindungsgemäß wird nun die Möglichkeit der Schaltwunscherkennung nicht mehr in einer separaten Kraftübertragungsvorrichtung angeordnet, sondern vielmehr in die Schalthebelvorrichtung selbst integriert. Unter einer Schalthebelvorrichtung ist im Sinne der vorliegenden Erfindung der Teil des Fahrzeugs zu verstehen, welcher als manuelle Schnittstelle für das Aufnehmen der Schaltkraft vom Fahrer zu verstehen ist. Bei einem Motorrad handelt es sich bei der Schaltvorrichtung demnach um den Tritthebel, welcher für das Einlegen und Wechseln der Gänge seitlich am Motorrad angeordnet ist. Wird eine erfindungsgemäße Kraftübertragungsvorrichtung beispielsweise für ein Kraftfahrzeug in Form eines Autos verwendet, so kann unter der Schalthebelvorrichtung auch der Gangwählhebel im Inneren des Fahrzeugs verstanden werden. Selbstverständlich können für andere Getriebearten insbesondere bei anderen Vorrichtungen die Schalthebelvorrichtungen auch andere technische Ausgestaltungen aufweisen.

Die Schalthebelvorrichtung der vorliegenden Erfindung ist aufgeteilt in drei wesentliche Abschnitte. Dabei handelt es sich um den Schalthebelanschluss, den Schalthebel und den Getriebeanschluss. Der Getriebeanschluss kann nun bei einer erfindungsgemäßen Kraftübertragungsvorrichtung direkt die entsprechende Schaltkraft in das Getriebe weiterleiten. Im Gegensatz zu bekannten Lösungen muss am Getriebeanschluss nun kein separates Schaltsensorsystem mehr angebracht werden, so dass hier kein zusätzlicher Bauraum mehr notwendig ist. Vielmehr ist es möglich, eine bestehende Schalthebelvorrichtung, zum Beispiel einen passiven Tritthebel eines Motorrads, durch eine Schalthebelvorrichtung gemäß der erfindungsgemäßen Kraftübertragungsvorrichtung auszutauschen und damit die erfindungsgemäße Qualität bei diesem Fahrzeug nachzurüsten.

Der Schalthebelanschluss dient dabei als explizite Aufnahmemöglichkeit und damit manuelle Schnittstelle für den Fahrer des Fahrzeugs. Am Schalthebelanschluss kann die Kraft mithilfe des Fußes oder der Hand oder eines anderen Körperteils des Fahrers direkt oder indirekt eingebracht werden. Der Schalthebel selbst dient zur Weiterleitung und insbesondere um einen entsprechenden Hebelarm für die Schalthebelvorrichtung beabstandet von der Lagervorrichtung zur Verfügung stellen zu können. Auf diese Weise wird es möglich, den Schalthebelanschluss relativ zum Fahrzeug zu bewegen.

Erfindungsgemäß sind nun zwei Bewegungen zu unterscheiden. Wünscht der Fahrer des Fahrzeugs, einen Schaltvorgang für das Getriebe durchzuführen, so wird er eine entsprechende Schaltkraft auf den Schalthebelanschluss aufbringen und damit diesen in Bewegung setzen. Diese generelle Bewegung ist eine Bewegung des Schalthebelanschlusses relativ zum Fahrzeug. Diese Bewegung hat jedoch zwei Komponenten. Zum Einen befindet sich eine übergeordnete Bewegungskomponente dieses Schalthebelanschlusses relativ zum Fahrzeug, zum Anderen kann je nach Kraftsituation eine Relativbewegung des Schalthebelanschlusses auch zum Getriebeanschluss stattfinden. Nachfolgend soll in einzelnen Schritten nun die Funktion des Kraftspeichers mit Bezug auf einen Schaltvorgang näher erläutert werden.

Beginnt der Fahrer mit dem Schaltvorgang, so erhöht er die Schaltkraft am Schalthebelanschluss und startet dessen Relativbewegung zum Fahrzeug. Zu Beginn ist am Getriebeanschluss anliegend die Gegenkraft zum Getriebe noch relativ gering und reicht nicht aus, um den Schaltvorgang in die Wege zu leiten. Dementsprechend bewegt sich der Getriebeanschluss nicht, während sich der Schalthebelanschluss durch das Vergrößern der Schaltkraft bewegt. Diese Relativbewegung wird zugelassen aufgrund der Tatsache, dass der Schalthebel innerhalb des Kraftpfades zwischen Schalthebelanschluss und Getriebeanschluss einen Kraftspeicher aufweist, welcher über die Relativbewegung ein Einspeichern der sich vergrößernden Schaltkraft ermöglicht. Das Vergrößern der Schaltkraft im Speicher des Zwischenspeichers erfolgt so lange, bis das Kraftgleichgewicht am Getriebeanschluss die notwendige Schaltkraft erreicht. Mit anderen Worten, vergeht eine definierte Zeitspanne bis zum Erreichen dieser Kraftgleichgewichtssituation für die Schaltkraft, wobei diese Zeitspanne abhängig ist von dem Weg, welcher durch den Schalthebelanschluss relativ zum Getriebeanschluss über diese Zeitspanne zurückgelegt worden ist. Ab dem Erreichen dieses Kraftgleichgewichts findet nun der Schaltvorgang im Getriebe statt. Dadurch reduziert sich beziehungsweise kann sich die Gegenkraft innerhalb des Getriebes reduzieren, so dass es nun langsam oder schlagartig, teilweise oder auch vollständig zu einer Entspannung des Kraftspeichers und damit einem Freigeben der Schaltkraft kommt. Dementsprechend kann dieser Schaltvorgang nun durchgeführt werden durch die im Kraftspeicher gespeicherte Schaltkraft und dementsprechend ohne oder nur durch eine geringe Weiterbewegung des Schalthebelanschlusses relativ zum Fahrzeug.

Basierend auf der voranstehenden Erläuterung eines Schaltvorganges wird sichtbar, dass innerhalb der Schalthebelvorrichtung nun eine Relativbewegung möglich wird, welche Detektionsmöglichkeiten mit sich bringt. Durch die erfindungsgemäß vorgesehene Sensorvorrichtung kann exakt diese Relativbewegung zwischen Schalthebelanschluss und Getriebeanschluss sicher erkannt werden. Vorzugsweise ist diese Sensorvorrichtung und dementsprechend auch Schalthebelanschluss, Getriebeanschluss und Kraftspeicher für eine bifunktionale Ausführungsweise ausgebildet. Darunter ist zu verstehen, dass sowohl ein Heraufschalten, als auch ein Herunterschalten nach dem voranstehend beschriebenen Muster erfolgen kann.

Weiter ist darauf hinzuweisen, dass der Kraftspeicher zum Beispiel in Form einer Federvorrichtung ausgebildet sein kann. Selbstverständlich sind jedoch auch komplexere Lösungen, zum Beispiel Elastomer-, Fluid- oder Pneumatiklösungen im Sinne der vorliegenden Erfindung als Kraftspeicher einsetzbar. Bevorzugt ist es, wenn die später noch näher erläuterte Funktion einer Torsionsfeder beziehungsweise eines Torsionsstabes als Kraftspeicher eingesetzt werden kann.

Als Sensorvorrichtung kann im Sinne der vorliegenden Erfindung jede Vorrichtung eingesetzt werden, welche in der Lage ist, die definierte Relativbewegung zwischen Schalthebelanschluss und Getriebeanschluss zu detektieren. Beispielsweise können hier elektrische oder elektronische Sensoren wie Hall-Sensoren oder Widerstandssensoren eingesetzt werden. Auch einfache mechanische Schalter oder optische Systeme sind im Sinne der vorliegenden Erfindung selbstverständlich denkbar. Kern der Sensorvorrichtung ist die Möglichkeit der Erkennung der Relativbewegung, wobei selbstverständlich eine redundante Auslegung einer solchen Sensorik von Vorteil sein kann.

Ein entscheidender Vorteil der vorliegenden Erfindung ist es nun, dass diese Kraftübertragungsvorrichtung eine bestehende Schalthebelvorrichtung an einem Fahrzeug, insbesondere an einem Motorrad, ersetzen kann. Dabei wird es möglich, bestehende Fahrzeuge beziehungsweise bestehende Getriebe nachträglich mit dieser Erkennungsmöglichkeit für ein Schaltassistenzsystem vorzubereiten beziehungsweise auszustatten. Bei Neukonstruktionen ist es nun nicht mehr notwendig, zusätzlichen Bauraum für die entsprechende Erkennungsfunktion für das Schaltassistenzsystem zur Verfügung zu stellen. Neben der reduzierten Komplexität führt dies zu deutlich reduzierten Kosten, Platzeinsparung und Gewichtseinsparung für das Getriebe beziehungsweise für das Fahrzeug.

Unter einer Lagervorrichtung kann im Sinne der vorliegenden Erfindung ein einzelner oder mehrere Lagerpunkte verstanden werden. Dies hängt von der Komplexität des tatsächlich eingesetzten Schalthebels an dem Fahrzeug ab. So kann zum Beispiel der Getriebeanschluss direkt als Lagervorrichtung ausgebildet sein beziehungsweise die Lagervorrichtung aufweisen. Bevorzugt ist die Lagervorrichtung für eine rotatorische Lagerung ausgebildet.

Entscheidend bei der vorliegenden Erfindung ist es, dass beim Schaltvorgang die gesamte Schaltvorrichtung in Bewegung gesetzt wird. Somit bewegt sich, je nach Zeitpunkt während des Schaltvorgangs, sowohl der Schalthebelanschluss als auch der Schalthebel selbst und der Getriebeanschluss. Unter der entsprechenden Bewegung können translatorische, rotatorische oder gemischte Bewegungen verstanden werden, wobei rotatorische Bewegungen beziehungsweise Hebelbewegungen erfindungsgemäß bevorzugt sind.

Die Sensorvorrichtung kann dabei sowohl qualitativ als auch quantitativ arbeiten. So ist es möglich, rein qualitativ zu erkennen, ob beziehungsweise in welcher Richtung die Relativbewegung tatsächlich stattgefunden hat. Quantitative Erkennung kann vorteilhaft sein, wenn eine Fehlerkennung vermieden werden soll. Bei quantitativer Erkennung der Relativbewegung wird es demnach möglich, definierte Schwellenwerte einzustellen und sogar nachträglich zu variieren, um eine Fehlauslösung mit noch höherer Sicherheit zu vermeiden.

Der Kraftspeicher kann eine Federkennlinie aufweisen, um die entsprechende Kraftspeicherfunktion zu erfüllen. Dabei kann die Federkennlinie insbesondere einstellbar beziehungsweise variierbar ausgebildet sein. Zum Beispiel kann die Federkennlinie lineare, progressive und/oder degressive Abschnitte beziehungsweise Ausbildungen aufweisen.

Eine erfindungsgemäße Kraftübertragungsvorrichtung lässt sich dahingehend weiterbilden, dass der Schalthebelanschluss als Tritthebel ausgebildet ist. Dabei handelt es sich insbesondere um ein Einsatzgebiet an einem Fahrzeug in Form eines Motorrades. Bekannte Schalthebelvorrichtungen sind als Tritthebelvorrichtungen üblicherweise seitlich an Motorrädern angebracht. Eine erfindungsgemäße Ausbildung des Schalthebelanschlusses als Tritthebel beziehungsweise dementsprechend der Schalthebelvorrichtung als Tritthebelvorrichtung führt zu einer Nachrüstmöglichkeit beziehungsweise einer einfachen Ausstattungsmöglichkeit von Motorrädern mit der erfindungsgemäßen Funktionalität. Solche Tritthebel sind üblicherweise auch mit einer zweiseitigen Funktionalität ausgestattet, so dass mit diesen sowohl ein Heraufschalten als auch ein Herunterschalten durchgeführt werden kann. Dementsprechend kann durch den Einsatz einer erfindungsgemäßen Kraftübertragungsvorrichtung auch eine bidirektionale Erkennung in beiden Richtungen zur Verfügung gestellt werden.

Bei der erfindungsgemäßen Kraftübertragungsvorrichtung ist der Kraftspeicher als rotatorischer Kraftspeicher auf der zweiten Längsachse ausgebildet, insbesondere in Form eines rotatorischen Federelementes, wobei der Schalthebelanschluss für eine rotatorische Relativbewegung zum Getriebeanschluss ausgebildet ist. Eine rotatorische Relativbewegung zum Getriebeanschluss bevorzugt insbesondere auch eine rotatorische Relativbewegung zum gesamten Fahrzeug für den Schalthebelanschluss. Dies wird insbesondere bei der Funktionalität eines Tritthebels an einem Motorrad von Vorteil sein. Ein entsprechend rotatorischer Kraftspeicher erlaubt es nun, umsetzende Getriebe zwischen unterschiedlichen Bewegungsformen zu vermeiden. Vielmehr kann der Kraftspeicher in direktem kraftschlüssigen Kontakt zum Schalthebelanschluss und zum Getriebeanschluss stehen, so dass eine reine Drehmomentspeicherung für sämtliche Relativbewegungen im Kraftspeicher möglich wird. Eine beispielhafte Ausführungsform für einen derartigen rotatorischen Kraftspeicher ist eine Torsionsfeder beziehungsweise der später noch beschriebene Torsionsstab. Selbstverständlich können auch andere Federsysteme oder Federvorrichtungen einen entsprechenden Kraftspeicher in Form von Federelementen zur Verfügung stellen. Dabei ist es selbstverständlich auch möglich, dass der Kraftspeicher in Kombination unterschiedlicher Systeme, zum Beispiel eine Federvorrichtung zusammen mit einem pneumatischen oder hydraulischen System, ausbildet. Selbstverständlich können im Kraftspeicher auch dämpfende Elemente beziehungsweise Dämpfungsvorrichtungen vorhanden sein.

Ein weiterer Vorteil ist es, wenn bei einer erfindungsgemäßen Kraftübertragungsvorrichtung der Getriebeanschluss die Lagervorrichtung aufweist. Wie bereits erläutert worden ist, dient die Lagervorrichtung insbesondere zur Ausbildung einer rotatorischen Lagerung. Um Gewicht, Bauteile und Platz zu sparen, ist insbesondere an Motorrädern häufig der Getriebeanschluss direkt für eine Lagerung des entsprechenden Tritthebels ausgebildet. Wird eine erfindungsgemäße Kraftübertragungsvorrichtung gleich dargestellt, so kann ein expliziter Austausch und damit ein Nachrüsten der erfindungsgemäßen Funktionalität für das entsprechende Motorrad stattfinden. Das Getriebe wird dabei in lagernder Weise direkt an den Getriebeanschluss angebunden. Damit kann eine weitere Reduktion der Teile, des Gewichtes und des Baumaßes erfolgen. Selbstverständlich sind jedoch auch andere und komplexere Hebelsysteme denkbar, bei welchen der Getriebeanschluss nicht rotatorisch sondern translatorisch vorliegt. Hier kann eine Lagervorrichtung beabstandet vom Getriebeanschluss sinnvoll sein.

Vorteilhaft ist es darüber hinaus, wenn bei einer erfindungsgemäßen Kraftübertragungsvorrichtung der Schalthebelanschluss eine erste Achse, der Schalthebel eine zweite Achse und der Getriebeanschluss eine dritte Achse aufweisen, wobei die erste Achse für alle Relativpositionen des Schalthebelanschlusses zum Getriebeanschluss eine Ebene aufspannt, welche parallel oder im Wesentlichen parallel zu der dritten Achse ausgerichtet ist. Dabei ist insbesondere auf die Relativbewegung des Schalthebelanschlusses zu achten. So kann je nach Ausführungsform der Relativbewegung eine Ebene aufgespannt werden oder eine Ebene mit einer leichten Krümmung. Entscheidend ist, dass die erste Achse und die zweite Achse für die entsprechende Ebene eine Parallelität zur dritten Achse aufweisen. Eine Korrelation zur zweiten Achse kann dabei winklig, insbesondere im rechten Winkel vorgesehen sein. Werden andere Winkel zwischen der ersten Achse und der zweiten Achse beziehungsweise zwischen der dritten Achse und der zweiten Achse vorgesehen, so sind diese beiden Winkel vorzugsweise gleich ausgeführt, so dass sozusagen eine Parallelverschiebung der beiden Achsen, nämlich der ersten Achse und der dritten Achse, relativ zueinander stattfindet. Dies kann auch als gekröpfte Ausbildung der Kraftübertragungsvorrichtung bezeichnet werden. Damit ist ein höherer Freiheitsgrad erzielbar, um eine erfindungsgemäße Kraftübertragungsvorrichtung an unterschiedliche geometrische Gegebenheiten an dem jeweiligen Getriebe anzupassen.

Ein weiterer Vorteil ist es, wenn bei einer erfindungsgemäßen Kraftübertragungsvorrichtung gemäß dem voranstehenden Absatz die Relativbewegung des Schalthebelanschlusses als Rotationsbewegung, insbesondere um die zweite Achse, ausgebildet ist, wobei sich zwischen einer Neutralposition des Schalthebelanschlusses und einer Schaltposition des Schalthebelabschlusses ein Schaltwinkel zwischen den Ausrichtungen der Achse in diesen beiden Positionen ergibt. Beispielsweise kann ein Schaltwinkel von bis zu 20° sinnvoll sein, so dass bei einem Schalten in zwei Richtungen ± 20° einen Bewegungsspielraum von insgesamt ca. 40° für die erste Achse definieren. Die Einstellung des Schaltwinkels erfolgt dabei für die jeweilige Schaltposition auf Basis des Kraftgleichgewichtes. Dabei ist darauf hinzuweisen, dass der Schaltwinkel abhängt von dem sich zum jeweiligen Zeitpunkt einstellenden Kraftgleichgewicht im Kraftspeicher. So kann je nach Fahrsituation und je nach Gangwahl beziehungsweise Ganghöhe ein unterschiedliches Kraftgleichgewicht innerhalb des Gesamtsystems der Kraftübertragungsvorrichtung vorliegen. Damit können sich selbstverständlich auch unterschiedliche Schaltwinkel für unterschiedliche Schaltpositionen bei unterschiedlichen Gangwählhöhen einstellen. Nach dem Schalten erfolgt vorzugsweise eine Rückstellung aus der entsprechenden Schaltposition in die Neutralposition. Das bedeutet, dass zwar für die jeweilige Ganghöhe unterschiedliche Schaltpositionen möglich sind, bevorzugt jedoch eine definierte und einzige Nulllage für die Neutralposition definiert ist.

Ein weiterer Vorteil ist erzielbar, wenn bei einer erfindungsgemäßen Kraftübertragungsvorrichtung der Schalthebelanschluss zumindest eine Schaltfläche aufweist für die Kontaktierung durch den Fahrer des Fahrzeugs, wobei die Schaltfläche eine Oberflächenkontur, insbesondere in Form einer Krümmung, aufweist, welche mit der Relativbewegung des Schalthebelanschlusses zum Getriebeanschluss korreliert. Die Schaltfläche dient sozusagen als manuelle Schnittstelle für die Kontaktierung mit dem Fuß oder mit der Hand durch den Fahrer. Ist der Schalthebelanschluss zum Beispiel als Tritthebel ausgebildet, so kann auf der Oberseite und/oder auf der Unterseite die entsprechende Schaltfläche ausgebildet sein. Erfolgt anschließend eine Relativrotation des Schalthebelanschlusses zum Getriebeanschluss, so kann eine entsprechende Krümmung in konvexer Weise als Oberflächenkontur eine Korrelation zu dieser Relativrotationsbewegung darstellen. Damit wird es möglich, eine ebene oder im Wesentlichen ebene Kontaktsituation für den Fuß beziehungsweise die Hand des Fahrers an der Schaltfläche unabhängig von der Bewegungsposition des Schalthebelanschlusses zur Verfügung zu stellen. Die Gefahr des Abrutschens des Fußes oder der Hand wird damit deutlich reduziert. Auch wird das Schaltgefühl verbessert, da am Fuß beziehungsweise an der Hand des Fahrers die Relativrotation des Schalthebelanschlusses beziehungsweise dessen Relativbewegung nicht oder nur zu einem kleinen Teil wahrgenommen werden kann. Die Schaltfläche ist vorzugsweise am Schalthebelanschluss mit einem Freischnitt ausgebildet, um für den Fuß beziehungsweise die Hand einen entsprechenden Freiraum bei der Bewegung aus der Neutralposition in die jeweilige Schaltposition zu geben. Vorzugsweise ist die Ausbildung beidseitig vorgesehen, um sowohl für das Heraufschalten als auch für das Herunterschalten die beschriebenen Vorteile erzielen zu können.

Vorteilhaft ist es ebenfalls, wenn bei einer erfindungsgemäßen Kraftübertragungsvorrichtung der Schalthebelanschluss ausgebildet ist für eine Relativbewegung zum Getriebeanschluss aus einer Neutralposition in wenigstens eine Schaltposition, wobei vorzugsweise der Kraftspeicher in der Neutralposition eine Vorspannkraft auf den Schalthebelanschluss ausübt. Darunter ist zu verstehen, dass der Kraftspeicher immer eine Schaltkraft gespeichert hat. Die minimal gespeicherte Kraft liegt dabei vorzugsweise in der Neutralposition des Schalthebelanschlusses und damit in der korrelierenden Neutralposition des Kraftspeichers vor. Diese minimale Schaltkraft im Kraftspeicher kann als Vorspannkraft bezeichnet werden. Diese Vorspannkraft dient dazu, ein statischeres Gefühl für den Fahrer und Benutzer der Kraftübertragungsvorrichtung am Schalthebelanschluss zu gewährleisten. Auch hilft sie, die Nulllage für die Neutralposition zu definieren und eine Rückführung aus der Schaltposition in die Neutralposition zu unterstützen. Selbstverständlich können zusätzlich mechanische und geometrische Anschläge vorgesehen sein, um die Neutralposition beziehungsweise die Schaltpositionen näher zu definieren oder sogar zu begrenzen. Die Vorspannung des Kraftspeichers wird dabei vorzugsweise bei der Montage in den Kraftspeicher eingebracht, so dass zu diesem Zeitpunkt eine Anpassung der Vorspannung vorzugsweise möglich wird.

Ein weiterer Vorteil kann erzielt werden, wenn bei einer erfindungsgemäßen Kraftübertragungsvorrichtung der Getriebeanschluss und/oder die Lagervorrichtung eine Adapterschnittstelle aufweisen für die Befestigung eines Adapters zur geometrischen Anpassung an ein spezifisches Fahrzeug. Insbesondere bei Nachrüstsystemen erfindungsgemäßer Kraftübertragungsvorrichtungen bringt dies einen hohen Flexibilitätsgrad als Vorteil mit sich. Beispielsweise kann an der Adapterschnittstelle ein Adapter in Form einer Verlängerung des Hebels oder einer Verlagerung der Drehachse angebracht werden. Eine Kraftübertragungsvorrichtung kann dabei vorzugsweise bereits einen entsprechenden Adapter in montierter beziehungsweise befestigter Weise an dieser Adapterschnittstelle aufweisen.

Vorteilhaft ist es weiter, wenn bei einer erfindungsgemäßen Kraftübertragungsvorrichtung die Sensorvorrichtung wenigstens ein Erkennungsmittel, welches ortsfest zum Schalthebelanschluss angeordnet ist, und ein Sensormittel, welches ortsfest zum Getriebeanschluss angeordnet ist, aufweist. Das Erkennungsmittel dient dabei einer entsprechenden Erkennungsmöglichkeit für das Sensormittel. Ist die Sensorvorrichtung mit einem Hall-Sensor ausgestattet, so kann das Erkennungsmittel beispielsweise in Form eines Magneten am Schalthebelanschluss ortsfest angebracht sein. Das Sensormittel weist den entsprechenden Hall-Sensor auf, welcher nun ortsfest am Getriebeanschluss angeordnet ist. Bei der Relativbewegung des Schalthebelanschlusses zum Getriebeanschluss erfolgt dementsprechend auch eine korrelierende und spezifische Relativbewegung des Erkennungsmittels zum Sensormittel. Dabei können Erkennungsmittel und/oder Sensormittel in doppelter Ausführung für eine redundante Auslegung vorgesehen werden. Die Anordnung des Erkennungsmittels und des Sensormittels ist dabei grundsätzlich frei. So kann das Sensormittel zum Beispiel auf der Außenseite des Schalthebels angeordnet sein. Dies kann vorne, oben, unten, hinten oder auch seitlich an dem Schalthebel erfolgen. Dabei kann das Sensorelement zumindest teilweise in eine Öffnung in dem Schalthebel insbesondere radial hineinragen. Das Erkennungsmittel könnte ebenfalls in eine derartige Öffnung von innen her hineinragen. Auch ist es möglich, dass das Erkennungsmittel sich komplett innerhalb eines Innenrohres des Schalthebelanschlusses befindet.

Ein weiterer Vorteil ist erzielbar, wenn bei einer erfindungsgemäßen Kraftübertragungsvorrichtung die Sensorvorrichtung ausgebildet ist, die erkannte Relativbewegung per drahtloser Kommunikation auszusenden. Beispielsweise kann ein Funksignal ausgesendet werden. Die notwendige Energie für diese drahtlose Kommunikation kann zum Beispiel aus einem Energiespeicher in Form einer Batterie oder eines Kondensators genommen werden. Auch ist es möglich, dass der Kraftspeicher selbst beziehungsweise die Relativbewegung zwischen Getriebeanschluss und Schalthebelanschluss eine Energieerzeugung zur Verfügung stellt, um diese drahtlose Kommunikation zu ermöglichen. Hier sei als Beispiel eine Piezo-Technik genannt, welche eine Relativbewegung in einen kurzzeitigen elektrischen Strom umsetzen kann. Eine Verkabelung ist bei einer derartigen Ausführungsform nicht mehr notwendig, so dass noch einfacher und kostengünstiger die entsprechende Nachrüstlösungsfunktionalität zur Verfügung gestellt werden kann.

Ein weiterer Vorteil ist es, wenn bei einer erfindungsgemäßen Kraftübertragungsvorrichtung der Schalthebelanschluss relativ zum Schalthebel in einer zur möglichen Relativbewegung zum Getriebeanschluss unterschiedlichen Richtung klappbar ausgebildet ist. Ist die erfindungsgemäße Kraftübertragungsvorrichtung zum Beispiel an einem Motorrad angeordnet, so kann bei tiefen Kurvenlagen und dementsprechend bei steilen Anstellwinkeln eine Kontaktierung des Schalthebelanschlusses mit der Fahrbahn erfolgen. Um Sturzgefahr zu reduzieren, kann eine entsprechende zusätzliche Klappbarkeit in unterschiedlicher Richtung zur beschriebenen Relativbewegung zum Getriebeanschluss die Kontaktierung reduzieren beziehungsweise ein Blockieren oder Verklemmen an der Fahrbahn mit entsprechender Sturzgefahr vermeiden.

Ein weiterer Vorteil wird erzielt, wenn bei einer erfindungsgemäßen Kraftübertragungsvorrichtung der Kraftspeicher einen Torsionsstab aufweist mit einem Schaltende mit einem Schaltanschlag und einem Getriebeende mit einem Getriebeanschlag. Dabei weist der Schalthebelanschluss eine erste Schalthebelanschluss-Führung für den Schaltanschlag und eine zweite Schalthebelanschluss-Führung für den Getriebeanschlag auf. Der Getriebeanschluss weist eine erste Getriebeanschluss-Führung für den Schaltanschlag und eine zweite Getriebeanschluss-Führung für den Getriebeanschlag auf. Mit anderen Worten, wird eine Korrelation zwischen Kraftspeicher, Schalthebelanschluss und Getriebeanschluss durch entsprechende Anschläge und Führungen gewährleistet. Bei den Schaltenden und Getriebeenden der Torsionsstäbe handelt es sich um die jeweils diametral beabstandeten Endabschnitte. In radialer Richtung gesehen, können die Führungen des Schalthebelanschlusses und des Getriebeanschlusses zumindest teilweise überlappen. Somit geben sie in unterschiedlichen Richtungen Freiräume vor, so dass bei einer Relativbewegung des Getriebeanschlusses und des Schalthebelanschlusses sich die Führungen der beiden Bauteile relativ zueinander bewegen. Dies führt zu einer Einbringung von Torsionskraft in den Torsionsstab durch entsprechendes Mitnehmen des Schaltanschlages beziehungsweise des Getriebeanschlages durch die entsprechende Führung. Durch die Ausbildung der Führungslänge und der jeweiligen Korrelation kann in geometrischer Weise eindeutig die Nulllage definiert werden. Die Freiläufe erlauben dabei den Bewegungsspielraum für die definierte Relativbewegung. Vorzugsweise ist in Schaltanschlag und Getriebeanschlag radial beidseitig eine symmetrische und oder im Wesentlichen symmetrische Ausbildung und Abstützung vorgesehen. Dabei können die Anschläge selbstverständlich nachträglich angeordnet, zum Beispiel eingesetzte Stifte, sein. Ein rotatorischer Versatz der Anschläge in einer entspannten Situation des Torsionsstabes ermöglicht eine einfache Einbringung einer Vorspannkraft, wie sie bereits mehrfach erläutert worden ist.

Die Kraftübertragungsvorrichtung gemäß dem voranstehenden Absatz kann dahingehend weitergebildet sein, dass der Torsionsstab am Schaltende und/oder am Getriebeende eine Montageschnittstelle aufweist für die Einbringung einer Torsionskraft in den Torsionsstab. Die Montageschnittstelle kann zum Beispiel eine von der Kreisform abweichende Schnittstelle sein. So kann beispielsweise eine Schraubenzierschnittstelle oder eine Torxschnittstelle vorgesehen sein. Bei der Montage kann dementsprechend der Torsionsstab tordiert und damit mit einer Vorspannkraft versehen werden. In dieser vorgespannten Position erfolgt das Einsetzen des Schaltanschlages, um diese Vorspannkraft in der Neutralposition des Schalthebelanschlusses zu sichern und zu definieren.

Vorteilhaft bei der Verwendung eines Torsionsstabes ist es weiter, wenn bei einer erfindungsgemäßen Kraftübertragungsvorrichtung die Winkel-Position des Schaltanschlages zum Getriebeanschlag variierbar ausgebildet ist. So kann zum Beispiel eine Kreuzbohrung oder eine versetzte Bohrung innerhalb des Torsionsstabes zwei oder mehr mögliche Einsatzpositionen für einen Schaltanschlag erlauben. Eine solche Kreuzbohrung erlaubt dementsprechend eine Einstellung oder sogar eine spätere Variation der Vorspannkraft des Torsionsstabes. Selbstverständlich können die Anschläge nachträglich befestigt werden und auch nach einer längeren Einsatzdauer ausgetauscht werden.

Ein weiterer Vorteil ist erzielbar, wenn bei einer erfindungsgemäßen Kraftübertragungsvorrichtung die Schaltvorrichtung und/oder die Sensorvorrichtung eine Schutzvorrichtung gegen die Beeinträchtigung der Sensorvorrichtung durch manuelle mechanische Beeinflussung aufweist. Dabei kann dieser Schutz insbesondere gegen eine Kontaktierung der Sensorvorrichtung durch den Fuß des Fahrers bei einem Motorrad dienen. Die Schutzvorrichtung kann zum Beispiel ein Schutzschild aufweisen. Weiter ist es möglich, dass diese Schutzvorrichtung wenigstens abschnittsweise durch ein Gehäuse der Sensorvorrichtung ausgebildet wird. Neben dem Schutz der Sensorvorrichtung kann durch die Schutzvorrichtung auch ein Schutz von Kabeln erfolgen, welche im Bereich der Sensorvorrichtung angeordnet sind.

Ebenfalls Gegenstand der vorliegenden Erfindung ist ein Verfahren für die Montage einer Kraftübertragungsvorrichtung gemäß der vorliegenden Erfindung, aufweisend die folgenden Schritte:
- Zur-Verfügung-Stellen eines Schalthebelanschlusses, eines Schalthebels und eines Getriebeanschlusses,
- Befestigen eines Kraftspeichers an dem Getriebeanschluss,
- Aufladen des Kraftspeichers mit einer Vorspannkraft,
- Befestigen des mit der Vorspannkraft aufgeladenen Kraftspeichers mit dem Schalthebelanschluss.

Durch die Montage einer erfindungsgemäßen Kraftübertragungsvorrichtung können die gleichen Vorteile erzielt werden, wie sie ausführlich mit Bezug auf eine erfindungsgemäße Kraftübertragungsvorrichtung erläutert worden sind. Dabei kann selbstverständlich der Kraftspeicher in kinematischer Umkehr auch zuerst am Schalthebelanschluss und zuletzt, mit aufgeladener Vorspannkraft, am Getriebeanschluss befestigt werden. Dabei wird insbesondere die mehrfach erläuterte Montageschnittstelle, zum Beispiel in Form einer Torxschnittstelle, Verwendung finden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Kraftübertragungsvorrichtung in Neutralposition,
- Fig. 2: die Ausführungsform der Fig. 1 in einer Schaltposition,
- Fig. 3: die Ausführungsform der Fig. 1 und 2 ohne die Sensorvorrichtung in Neutralposition,
- Fig. 4: die Ausführungsform der Fig. 3 in einer ersten Schaltposition,
- Fig. 5: die Ausführungsform der Fig. 3 und 4 in einer zweiten Schaltposition,
- Fig. 6: die Ausführungsform der Fig. 1 bis 5 in einer Draufsicht im Querschnitt,
- Fig. 7: die Ausführungsform der Fig. 1 bis 6 in drei separaten Darstellungen in Neutralposition,
- Fig. 8: die Ausführungsform der Fig. 7 in einer ersten Schaltposition,
- Fig. 9: die Ausführungsform der Fig. 7 und 8 in einer zweiten Schaltposition,
- Fig. 10: einen ersten Montagezustand einer erfindungsgemäßen Kraftübertragungsvorrichtung,
- Fig. 11: einen nächsten Montagezustand anschließend an Fig. 10,
- Fig. 12: einen nächsten Montagezustand anschließend an Fig. 11,
- Fig. 13: in seitlicher Ansicht eine Ausführungsform einer erfindungsgemäßen Kraftübertragungsvorrichtung in Neutralposition,
- Fig. 14: die Ausführungsform der Fig. 13 in einer ersten Schaltposition,
- Fig. 15: die Ausführungsform der Fig. 13 und 14 in einer weiteren Schaltposition,
- Fig. 16: eine Ausführungsform mit einer Schutzvorrichtung und
- Fig. 17: die Ausführungsform der Fig. 16 in anderer Ansicht.

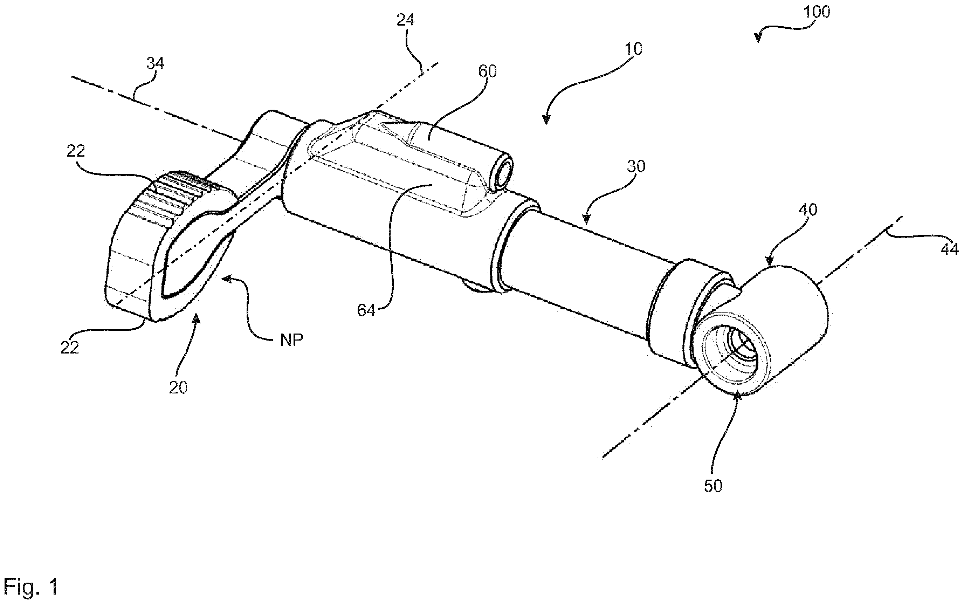

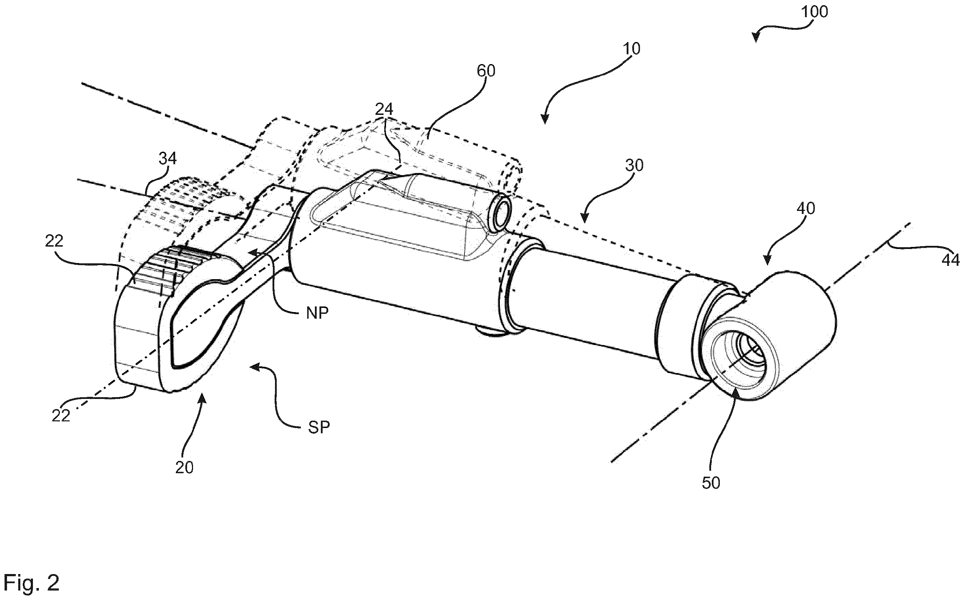

Die Fig. 1 und 2 zeigen schematisch eine erste Ausführungsform einer erfindungsgemäßen Kraftübertragungsvorrichtung 100. Diese weist eine Schalthebelvorrichtung 10 auf, welche direkt seitlich an einem Motorrad für das Schalten eines Getriebes angebracht werden kann. Die Anbringung erfolgt dabei über eine Lagervorrichtung 50, welche hier zur rotatorischen Lagerung der Schalthebelvorrichtung 10 am Motorrad ausgebildet ist. Die Schalthebelvorrichtung 10 ist hier Teil des Getriebeanschlusses 40, welche eine Rotationsbewegung und dementsprechend ein Drehmoment als Schaltkraft in das Getriebe einbringen kann.

Um den Schaltvorgang durchzuführen, muss der Fahrer des Motorrades auf den Schalthebelanschluss 20 mit seinem Fuß auftreten. Hierfür kontaktiert der den Schalthebelanschluss 20 in seiner Neutralposition NP gemäß Fig. 1 auf der Oberseite oder Unterseite an der entsprechenden Schaltfläche 22. Durch weiteres Treten beziehungsweise Ziehen wird Schaltkraft in den Schalthebelanschluss 20 eingebracht, so dass sich eine Bewegung des Schalthebelanschlusses 20 relativ zum Motorrad durchführen lässt, wie sie mit Bezug zu Fig. 2 erkennbar wird. In Fig. 2 ist mit gestrichelter Linie die Neutralposition NP und mit durchgezogener Linie die Schaltposition SP dargestellt. In der Schaltposition SP erfolgt der Schaltvorgang im Getriebe, so dass nun die entsprechende Schaltkraft über den Getriebeanschluss weitergegeben worden ist.

In den Fig. 1 und 2 sind auch gut die Korrelationen der einzelnen Achsen 24 des Schalthebelanschlusses 20, der zweiten Achse 34 des Schalthebels 30 und der dritten Achse 44 des Getriebeanschlusses 40 zu erkennen.

Weiter ist in den Fig. 1 und 2 in Form eines abgeschlossenen und vorzugsweise wasserdicht bespritzten Gehäuses eine Sensorvorrichtung 60 dargestellt, welche ein Sensormittel 64 aufweist.

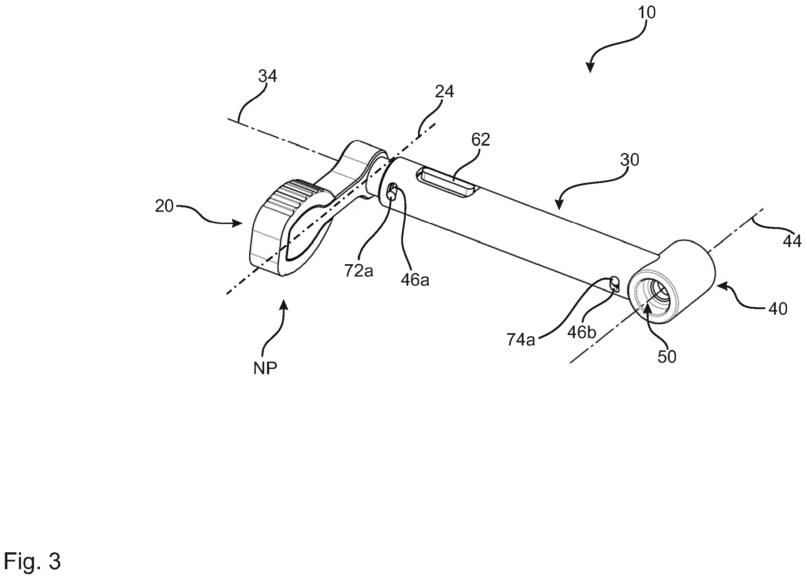

Die Fig. 3 bis 5 zeigen die Ausführungsform der Fig. 1 und 2 ohne ein äußeres Gehäuse und insbesondere ohne Sensorvorrichtung 60. Dabei zeigen die drei Fig. 3 bis 5 drei unterschiedliche Positionen des Schalthebelanschlusses 20. Keine dieser drei Positionen hat jedoch einen Schaltvorgang bereits durchgeführt, sondern alle drei Positionen zeigen die Situation, kurz bevor der Schaltvorgang tatsächlich durchgeführt wird.

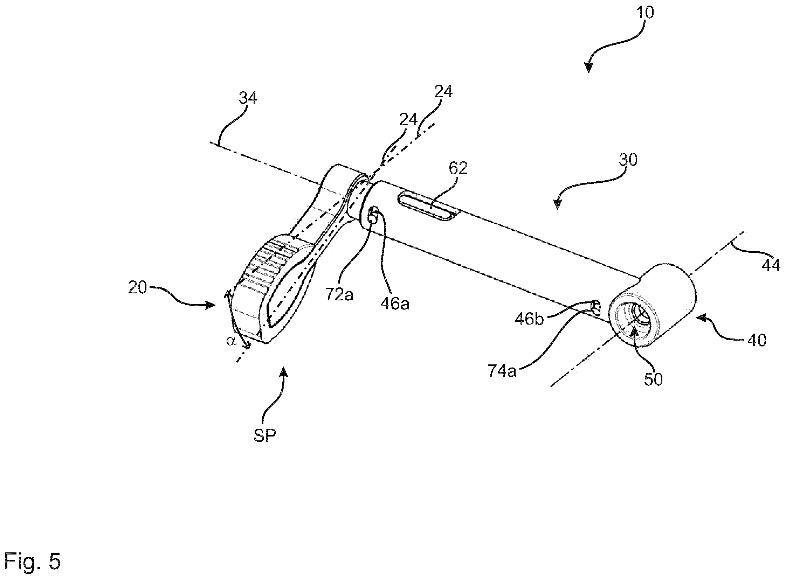

Fig. 3 zeigt dabei die Neutralposition NP des Schalthebelanschlusses 20. In dieser Neutralposition befinden sich entsprechende Schaltanschläge 72 und Getriebeanschläge 74 in zugehörigen Führungen 46a und 46b ebenfalls in einer vorgespannten Neutralposition. Das Erkennungsmittel 62 zeigt diese Neutralposition NP an. Tritt nun der Fahrer des Motorrades auf den Schalthebelanschluss 20, so findet eine Relativrotation des Schalthebelanschlusses 20 zum Getriebeanschluss 40 statt, wie sie die Fig. 5 zeigt. Der Schalthebelanschluss 20 bewegt sich nach unten, wobei für diese Relativbewegung Kraft aufgewendet werden muss, um eine Torsion des Torsionsstabes 70 innerhalb des Schalthebels 30 durchzuführen. Diese Bewegung ist anhand der veränderten Korrelation der Anschläge46a und 46b in den Führungen 72a und 74a zu erkennen. Das Erkennungsmittel 62 hat sich nun in eine Position für die Schaltposition SP bewegt.

Die voranstehende Vorgehensweise findet gleichermaßen statt, wenn von unten am Schalthebelanschluss 20 dieser nach oben gedrückt wird. Auch hier wird der Schalthebelanschluss 20 von der Neutralposition NP in eine Schaltposition SP bewegt. In beiden Fällen stellt sich ein Schaltwinkel α ein, um die entsprechende Schaltposition SP zu definieren.

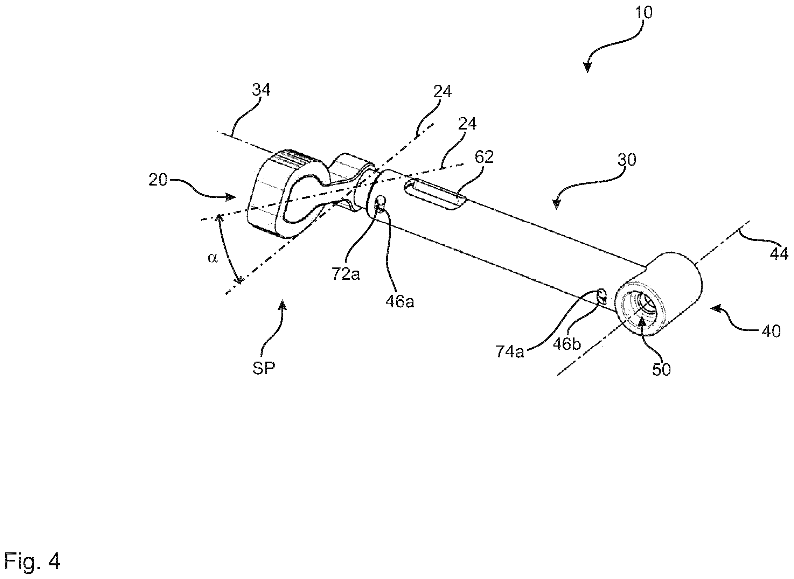

Ausgehend von den Positionen gemäß den Fig. 4 und 5, ist ein Kraftgleichgewicht vorhanden zwischen der Schaltkraft im Kraftspeicher 32 und der notwendigen Schaltgegenkraft aus dem Getriebe. Zu diesem Zeitpunkt findet nun der Schaltvorgang statt, wodurch sich die Gegenkraft im Getriebe reduziert und zumindest ein Teil der Schaltkraft, welche im Kraftspeicher 32 gespeichert ist, freigegeben wird. Gemäß der Fig. 5 bewegt sich nun der Schalthebel 30 nach unten und der Schaltwinkel α reduziert sich wieder auf 0°, so dass die gesamte Schalthebelvorrichtung 10 ausgehend von der Fig. 5 in die Position gelangt, wie sie die Fig. 2 zeigt.

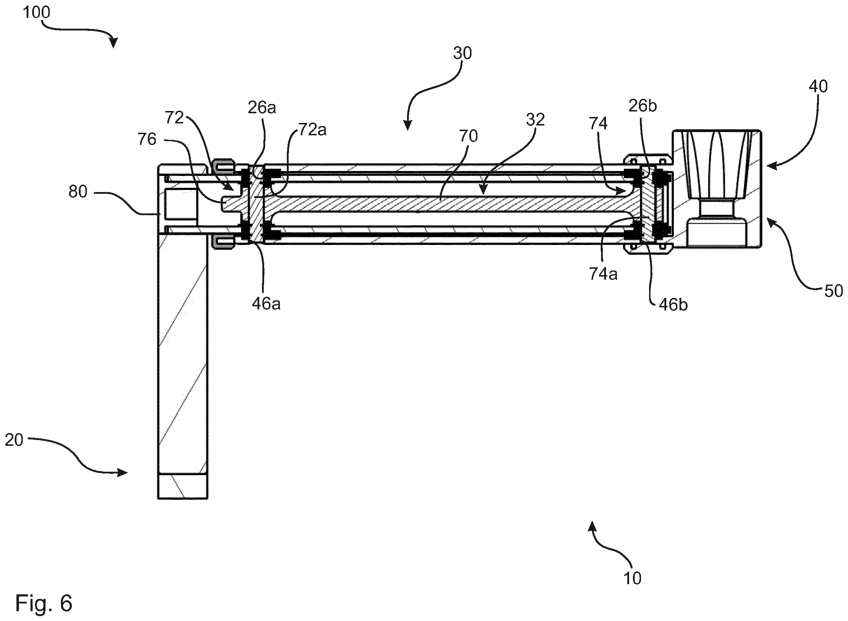

In Fig. 6 ist in einer schematischen Draufsicht im Querschnitt gut zu erkennen, wie der Kraftspeicher 32 in Form eines Torsionsstabes 70 ausgebildet sein kann. Die entsprechenden Anschläge in Form des Schaltanschlages 72a und des Getriebeanschlages 74a sind am entsprechenden Schaltende 72 und am Getriebeende 74 angeordnet. Ebenfalls Teil des Schaltendes 72 ist eine Montageschnittstelle 76 mit einem von der Kreisform abweichenden Querschnitt, um die später noch beschriebene Montage durchzuführen. Bei den beiden Anschlägen 72a und 74a handelt es sich um eingesetzte Stifte, um in Eingriff mit den zugehörigen Führungen 46a, 46b, 26a und 26b zu gelangen.

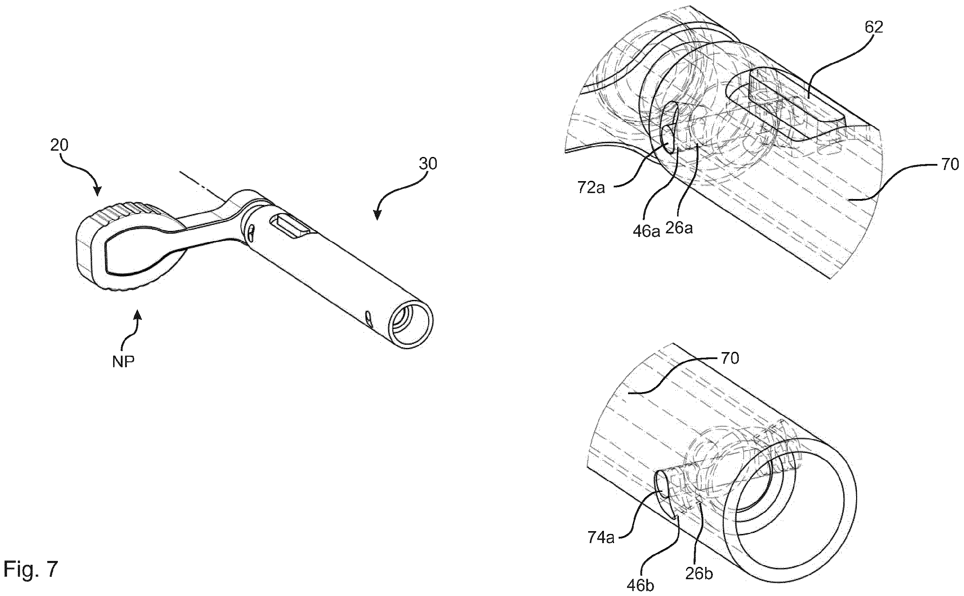

Anhand der Fig. 7, 8 und 9 wird nun die Korrelation des Kraftspeichers 32 in Form des Torsionsstabes 70 zu den weiteren Bauteilen beschrieben. Jede dieser Fig. 7 bis 9 zeigt dabei nochmals die Positionen gemäß der Fig. 3 bis 5, jedoch in zwei Ausschnitten zusätzlich die Korrelation des Schaltendes 72 und des Getriebeendes 74 des Torsionsstabes 70 innerhalb des Schalthebels 30. Bei den entsprechenden Führungen handelt es sich um Langlöcher, welche miteinander überlappen. In Fig. 7 ist die Neutralposition NP des Schalthebelanschlusses 20 dargestellt. Am Schaltende 72 des Torsionsstabes 70 befindet sich der Schaltanschlag 72a in einer Position, in welcher der Freilauf der beiden Führungen 26a und 46a nach oben gegeben ist. Am gegenüberliegenden Getriebeende 74 des Torsionsstabes 70 befindet sich der Getriebeanschlag 74a in einer Position, in welcher der Freilauf der beiden Führungen 26b und 46b noch unten gegeben ist. Durch den entgegengesetzt ausgerichteten Freilauf dieser Führungen 46a, 46b, 26a und 26b ist gewährleistet, dass diese Neutralposition NP insbesondere in vorgespannter Weise eine definierte Nulllage ausbildet.

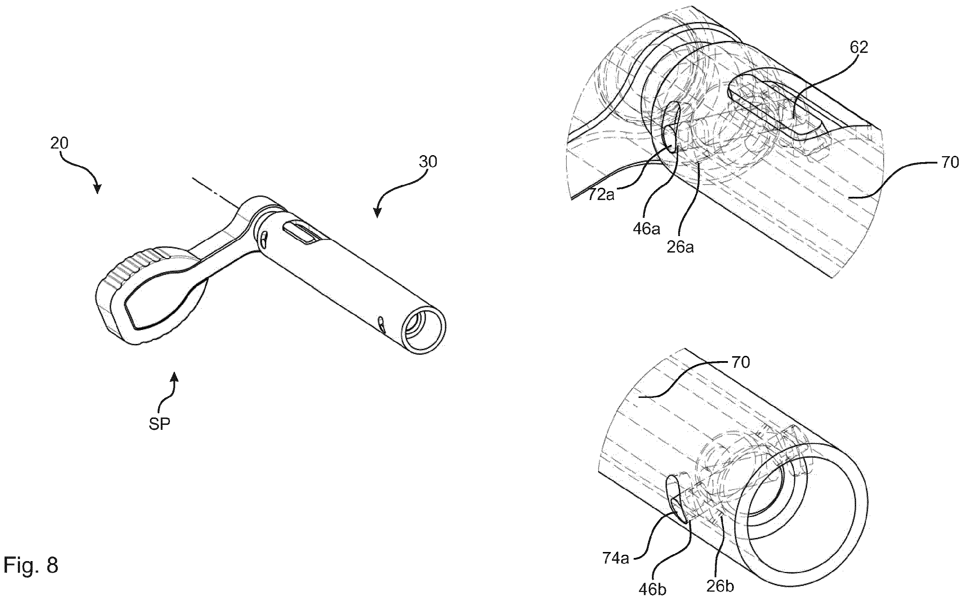

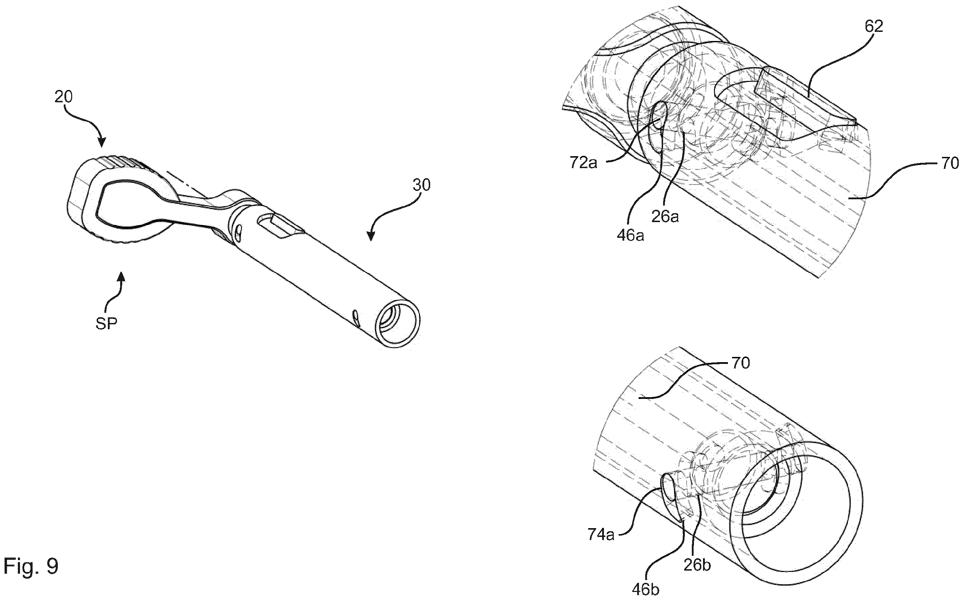

Findet nun eine Bewegung statt, wie sie als Relativbewegung mit Bezug auf die Fig. 3 bis 5 näher erläutert worden ist, so verändern sich die Relationen zwischen den Führungen 26a, 26b, 46a, 46b und den entsprechenden Anschlägen 72a und 74a wie folgt. Bei der Schaltposition SP gemäß Fig. 8 hat sich der Schalthebelanschluss 20 nach unten bewegt. Nunmehr haben sich die Freiläufe der Führungen 26a und 46a beziehungsweise 26b und 46b so miteinander verschoben, dass sie durch eine Bewegung des jeweiligen Anschlages 74a bzw. 72a teilweise mitgenommen worden sind. Dies führt zum Einen zur Mitnahme des Erkennungsmittels 62 zum Anzeigen der Schaltposition SP und zum Anderen zu einer Erhöhung der Tordierung, nämlich des Relativwinkels zwischen diesen beiden Stiften in Form der Anschläge 72a und 74a. Gleiches erfolgt auch bei einer konträren Bewegung in eine entgegensetzte Schaltposition SP, wie sie die Fig. 9 zeigt. Hier ist gut zu erkennen, wie einfach und kostengünstig durch entsprechende geometrische Korrelation der Führungen 26a, 26b, 46a und 46b definierte Neutralpositionen NP und sogar entsprechende Endanschläge über die Schaltpositionen SP definierbar sind.

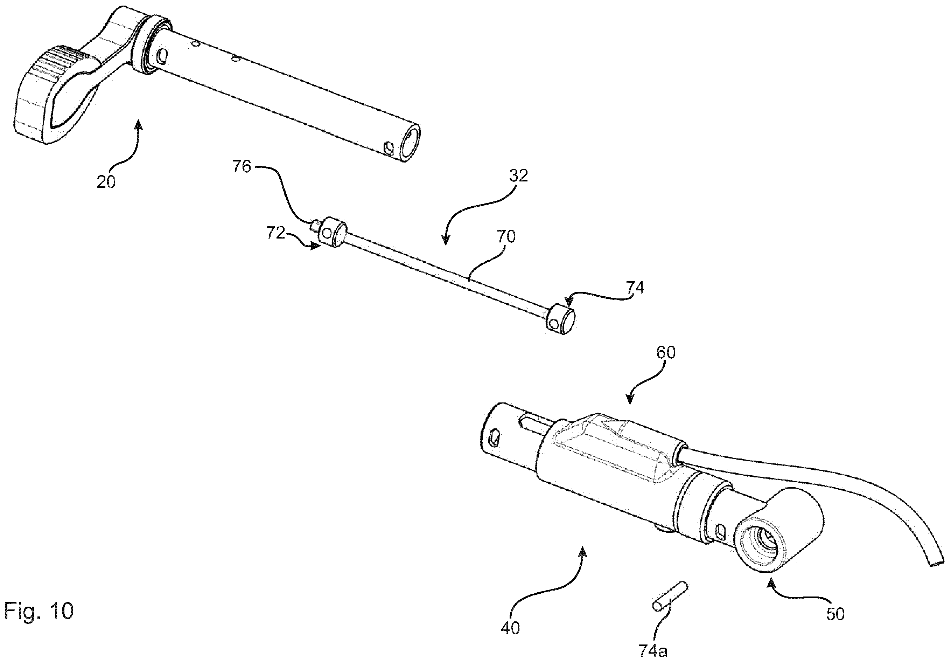

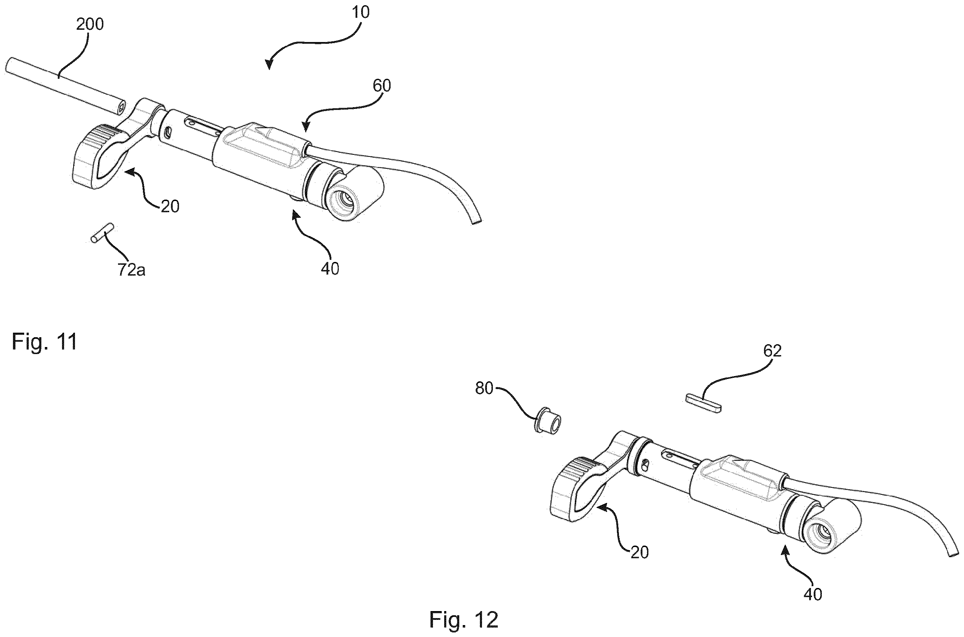

Die Fig. 10, 11 und 12 zeigen eine Montagemöglichkeit für eine erfindungsgemäße Kraftübertragungsvorrichtung 100. Ausgehend von Fig. 10 erfolgt die Montage durch ein Einschieben des Torsionsstabes 70 in den Schalthebelanschluss 20. Dabei sind zwei im Winkel zueinander versetzte Bohrungen an dem Schaltende 72 beziehungsweise dem Getriebeende 74 des Torsionsstabes 70 zu erkennen. Nach dem Einsetzen erfolgt ein Aufschieben des Getriebeanschlusses 40 und damit des Schalthebels 30, so dass final zu diesem Schritt als Stift ein Getriebeanschlag 74a eingesetzt werden kann. In dieser Position ist in Fig. 11 eine montierte Variante gezeigt. Mithilfe eine Montagewerkzeuges 200 kann nun an der Montageschnittstelle 76 eine Vorspannkraft in Form einer Torsion in den Torsionsstab 70 eingebracht werden. Sobald eine entsprechende Deckung der Bohrung am Schaltende 72 mit den zugehörigen Führungen 46a und 26a vorliegt, wird der entsprechende, als Stift ausgebildete Schaltanschlag 72a eingeschoben und damit die Vorspannkraft fixiert. Final wird gemäß Fig. 12 noch eine Abdeckung 80 aufgesetzt, um eine Wasserdichtigkeit zu gewährleisten sowie ein Magnet als Erkennungsmittel 62 angebracht. Wird nun noch das wasserdichte verspritzte Gehäuse der Sensorvorrichtung 60 übergeschoben, so wird die Kraftübertragungsvorrichtung 100 finalisiert und weist eine Form auf, wie sie zum Beispiel die Fig. 1 und 2 zeigen.

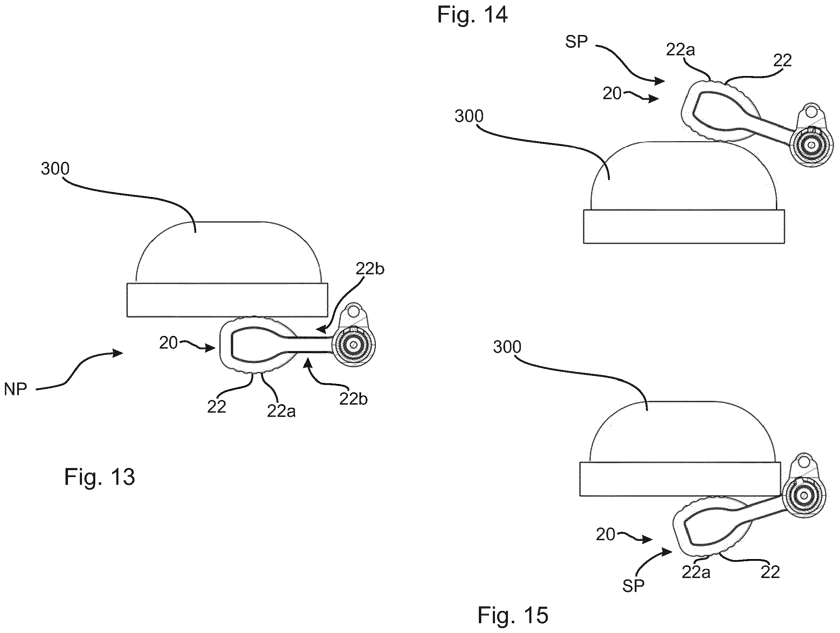

In den Fig. 13, 14 und 15 werden drei verschiedene Positionen dargestellt, bei welchen der Schalthebelanschluss 20 als Tritthebel eines Motorrades ausgebildet ist. Hier ist gut zu erkennen, wie die Schaltflächen 22 jeweils eine Oberflächenkontur 22a in gekrümmter Weise aufweisen, so dass der Fuß 300 nicht verkippen muss. Die Relativrotation führt damit zu einer gleichbleibenden Kontaktposition mit dem Fuß 300, wobei die Gefahr des Abrutschens mit dem Fuß 300 reduziert oder sogar minimiert wird. Gleichzeitig sind radial beabstandet von dem entsprechenden Kraftspeicher 32 zum Schalthebelanschluss 20 Freischnitte 22b zu erkennen, um dem Fuß 300 den entsprechenden Bewegungsspielraum für die Durchführung der jeweiligen Schaltbewegung zu geben.

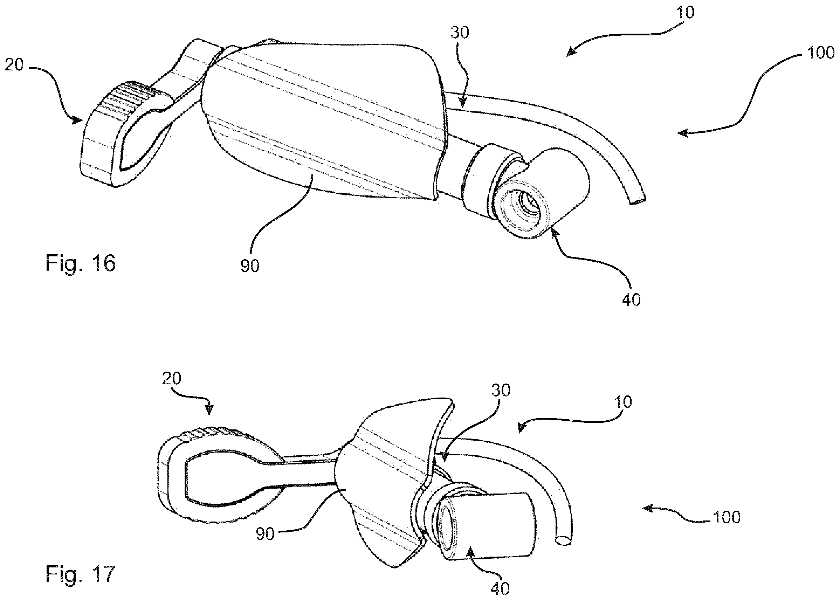

In den beiden Fig. 16 und 17 ist eine weitere Ausführungsform einer erfindungsgemäßen Schalthebelvorrichtung 10 dargestellt. Hier wurde zum Schutz der Sensorvorrichtung 60 diese mit einer Schutzvorrichtung 90 in Form eines Schutzschildes versehen. Damit kann bei der Betätigung des Schalthebelanschlusses 20 mit dem Fuß 300 eine mechanische Beschädigung der Sensorvorrichtung 60 vermieden werden. Auch die Verkabelung, welche sich zu der Sensorvorrichtung 60 hin erstreckt, wird wenigstens abschnittsweise von dem Schutzschild der Schutzvorrichtung 90 mit abgedeckt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung, welche durch den Anspruch 1 definiert ist, zu verlassen.

### Bezugszeichen

- 10: Schalthebelvorrichtung
- 20: Schalthebelanschluss
- 22: Schaltfläche
- 22a: Oberflächenkontur
- 22b: Freischnitt
- 24: erste Achse
- 26a: erste Schalthebelanschluss-Führung
- 26b: zweite Schalthebelanschluss-Führung
- 30: Schalthebel
- 32: Kraftspeicher
- 34: zweite Achse
- 40: Getriebeanschluss
- 44: dritte Achse
- 46a: erste Getriebeanschluss-Führung
- 46b: zweite Getriebeanschluss-Führung
- 50: Lagervorrichtung
- 60: Sensorvorrichtung
- 62: Erkennungsmittel
- 64: Sensormittel
- 70: Torsionsstab
- 72: Schaltende
- 72a: Schaltanschlag
- 74: Getriebeende
- 74a: Getriebeanschlag
- 76: Montageschnittstelle
- 80: Abdeckung
- 90: Schutzvorrichtung
- 100: Kraftübertragungsvorrichtung
- 200: Montagewerkzeug
- 300: Fuß

- NP: Neutralposition
- SP: Schaltposition
- α: Schaltwinkel

## Patentansprüche

1. Kraftübertragungsvorrichtung (100) für ein Getriebe, insbesondere eines Motorades, mit einem Schaltassistenzsystem, aufweisend eine Schalthebelvorrichtung (10) mit einer Lagervorrichtung (50) für die bewegbare Lagerung an einem Fahrzeug, wobei die Schalthebelvorrichtung (10) einen Schalthebelanschluss (20) für die Aufnahme einer Schaltkraft, einen sich entlang einer zweiten Längsachse (34) erstreckenden Schalthebel (30) für die Weiterleitung der Schaltkraft und einen Getriebeanschluss (40) für die Abgabe der Schaltkraft an das Getriebe aufweist, wobei der Schalthebel (30) einen Kraftspeicher (32) für die Zwischenspeicherung wenigstens eines Teils der Schaltkraft aufweist, so dass eine Relativbewegung zwischen dem Schalthebelanschluss (20) und dem Getriebeanschluss (40) unter Änderung der im Kraftspeicher (32) gespeicherten Schaltkraft erfolgen kann, wobei die Schalthebelvorrichtung (10) eine Sensorvorrichtung (60) aufweist für die Erkennung der Relativbewegung zwischen dem Schalthebelanschluss (20) und dem Getriebeanschluss (40), **dadurch gekennzeichnet, dass** der Kraftspeicher (32) als rotatorischer Kraftspeicher (32) auf der zweiten Längsachse (34) ausgebildet ist, und der Schalthebelanschluss (20) für eine rotatorische Relativbewegung zum Getriebeanschluss (40) ausgebildet ist.

2. Kraftübertragungsvorrichtung (100) nach einem der vorangegangenen Ansprüche **dadurch gekennzeichnet, dass** der Schalthebelanschluss (20) als Tritthebel ausgebildet ist

3. Kraftübertragungsvorrichtung (100) nach einem der vorangegangenen Ansprüche **dadurch gekennzeichnet, dass** der Kraftspeicher (32) in Form eines rotatorischen Federelements ausgebildet ist.

4. Kraftübertragungsvorrichtung (100) nach einem der vorangegangenen Ansprüche **dadurch gekennzeichnet, dass** der Getriebeanschluss (40) die Lagervorrichtung (50) aufweist.

5. Kraftübertragungsvorrichtung (100) nach einem der vorangegangenen Ansprüche **dadurch gekennzeichnet, dass** der Schalthebelanschluss (20) eine erste Längsachse (24), der Schalthebel (30) besagte zweite Längsachse (34) und der Getriebeanschluss (40) eine dritte Längsachse (44) aufweisen, wobei die erste Längsachse (24) für alle Relativpositionen des Schalthebelanschlusses (20) zum Getriebeanschluss (40) eine Ebene aufspannt, welche parallel oder im Wesentlichen parallel zu der dritten Längsachse (44) ausgerichtet ist.

6. Kraftübertragungsvorrichtung (100) nach Anspruch 5 **dadurch gekennzeichnet, dass** die Relativbewegung des Schalthebelanschlusses (20) als Rotationsbewegung, insbesondere um die zweite Längsachse (34), ausgebildet ist, wobei sich zwischen einer Neutralposition (NP) des Schalthebelanschlusses (20) und einer Schaltposition (SP) des Schalthebelanschlusses (20) ein Schaltwinkel (α) zwischen den Ausrichtungen der ersten Längsachse (24) in diesen beiden Positionen ergibt.

7. Kraftübertragungsvorrichtung (100) nach einem der vorangegangenen Ansprüche **dadurch gekennzeichnet, dass** der Schalthebelanschluss (20) zumindest eine Schaftfläche (22) aufweist für die Kontaktierung durch den Fahrer des Fahrzeugs, wobei die Schaltfläche (22) eine Oberflächenkontur (22a) in Form einer Krümmung aufweist, welche mit der Relativbewegung des Schalthebelanschlusses (20) zum Getriebeanschluss (40) korreliert.

8. Kraftübertragungsvorrichtung (100) nach einem der vorangegangenen Ansprüche **dadurch gekennzeichnet, dass** der Schalthebelanschluss (20) ausgebildet ist für eine Relativbewegung zum Getriebeanschluss (40) aus einer Neutralposition (NP) in wenigstens eine Schaltposition (SP), wobei vorzugsweise der Kraftspeicher (32) in der Neutralposition (NP) eine Vorspannkraft auf den Schalthebelanschluss (20) ausübt.

9. Kraftübertragungsvorrichtung (100) nach einem der vorangegangenen Ansprüche **dadurch gekennzeichnet, dass** der Getriebeanschluss (40) und/oder die Lagervorrichtung (50) eine Adapterschnittstelle aufweisen für die Befestigung eines Adapters zur geometrischen Anpassung an ein spezifisches Fahrzeug.

10. Kraftübertragungsvorrichtung (100) nach einem der vorangegangenen Ansprüche **dadurch gekennzeichnet, dass** die Sensorvorrichtung (60) wenigstens ein Erkennungsmittel (62), welches ortsfest zum Schalthebelanschluss (20) angeordnet ist, und ein Sensormittel (64), welches ortsfest zum Getriebeanschluss (40) angeordnet ist, aufweist.

11. Kraftübertragungsvorrichtung (100) nach einem der vorangegangenen Ansprüche **dadurch gekennzeichnet, dass** die Sensorvorrichtung (60) ausgebildet ist die erkannte Relativbewegung per drahtloser Kommunikation auszusenden.

12. Kraftübertragungsvorrichtung (100) nach einem der vorangegangenen Ansprüche **dadurch gekennzeichnet, dass** der Schalthebelanschluss (20) relativ zum Schalthebel (30) in einer zur möglichen Relativbewegung zum Getriebeanschluss (40) unterschiedlichen Richtung klappbar ausgebildet ist.

13. Kraftübertragungsvorrichtung (100) nach einem der vorangegangenen Ansprüche **dadurch gekennzeichnet, dass** der Kraftspeicher (32) einen Torsionsstab (70) aufweist mit einem Schaltende (72) mit einem Schaltanschlag (72a) und einem Getriebeende (74) mit einem Getriebeanschlag (74a), wobei der Schalthebelanschluss (20) eine erste Schalthebelanschluss-Führung (26a) für den Schaltanschlag (72a) und eine zweite Schalthebelanschluss-Führung (26b) für den Getriebeanschlag (74a) und der Getriebeanschluss (40) eine erste Getriebeanschluss-Führung (46a) für den Schaltanschlag (72a) und eine zweite Getriebeanschluss-Führung (46b) für den Getriebeanschlag (74a) aufweist.

14. Kraftübertragungsvorrichtung (100) nach Anspruch 13, **dadurch gekennzeichnet, dass** der Torsionsstab (70) am Schaltende (72) und/oder am Getriebeende (74) eine Montageschnittstelle (76) aufweist für die Einbringung einer Torsionskraft in den Torsionsstab (70).

15. Kraftübertragungsvorrichtung (100) nach einem der Ansprüche 13 oder 14, **dadurch gekennzeichnet, dass** die Winkelposition des Schaltanschlages (72a) zum Getriebeanschlag (74a) variierbar ausgebildet ist.

16. Kraftübertragungsvorrichtung (100) nach einem der Ansprüche 13 oder 14, **dadurch gekennzeichnet, dass** die Schaltvorrichtung (10) und/oder die Sensorvorrichtung (60) eine Schutzvorrichtung (90) gegen die Beeinträchtigung der Sensorvorrichtung (60) durch manuelle mechanische Beeinflussung aufweist.

17. Verfahren für die Montage der Kraftübertragungsvorrichtung (100) mit den Merkmalen eines der Ansprüche 1 bis 16, aufweisend die folgenden Schritte:
- Zur Verfügung stellen des Schalthebelanschlusses (20), des Schalthebels (30) und des Getriebeanschlusses (40),
- Befestigen des Kraftspeichers (32) an dem Getriebeanschluss (40),
- Aufladen des Kraftspeichers (32) mit einer Vorspannkraft,
- Befestigen des mit der Vorspannkraft aufgeladenen Kraftspeichers (32) mit dem Schalthebelanschluss (20).

## Claims

1. Power transmission device (100) for a transmission, in particular of a motor cycle, with a shift assistance system, comprising a shift lever device (10) with a bearing device (50) for the movable mounting on a vehicle, wherein the shift lever device (10) has a shift lever connection (20) for receiving a shift force, a shift lever (30) extending along a second longitudinal axis (34) for transmitting the shift force and a transmission connection (40) for delivering the shift force to the transmission, wherein the shift lever (30) comprises an energy store (32) for temporarily storing at least a portion of the shift force, so that a relative movement between the shift lever connection (20) and the transmission connection (40) can occur by changing the shift force stored in the energy store (32), wherein the shift lever device (10) has a sensor device (60) for detecting the relative movement between the shift lever connection (20) and the transmission connection (40), **characterized in that** the energy store (32) is formed as a rotational energy store (32) on the second longitudinal axis (34), and the shift lever connection (20) is designed for a rotational relative movement to the transmission connection (40).

2. Power transmission device (100) according to one of the preceding claims, **characterized in that** the shift lever connection (20) is designed as a step lever.

3. Power transmission device (100) according to one of the preceding claims, **characterized in that** the energy store (32) is designed in the form of a rotational spring element.

4. Power transmission device (100) according to one of the preceding claims **characterized in that** the transmission connection (40) comprises the bearing device (50).

5. Power transmission device (100) according to one of the preceding claims, **characterized in that** the shift lever connection (20) has a first longitudinal axis (24), the shift lever (30) has said second longitudinal axis (34) and the transmission connection (40) has a third longitudinal axis (44), wherein the first longitudinal axis (24) defines a plane for all relative positions of the shift lever connection (20) to the transmission connection (40), which is oriented parallel or substantially parallel to the third longitudinal axis (44).

6. Power transmission device (100) according to claim 5, **characterized in that** the relative movement of the shift lever connection (20) is designed as a rotational movement, in particular about the second longitudinal axis (34), wherein between a neutral position (NP) of the shift lever connection (20) and a shift position (SP) of the shift lever connection (20), a shift angle (α) results between the orientations of the first longitudinal axis (24) in these two positions.

7. Power transmission device (100) according to one of the preceding claims **characterized in that** the shift lever connection (20) has at least one shift surface (22) for a contact with the driver of the vehicle, wherein the shift surface (22) has a surface contour (22a) in the form of a curvature which correlates with the relative movement of the shift lever connection (20) to the transmission connection (40).

8. Power transmission device (100) according to one of the preceding claims, **characterized in that** the shift lever connection (20) is designed for a relative movement to the transmission connection (40) from a neutral position (NP) into at least one shift position (SP), wherein preferably the energy store (32) exerts a pretensioning force on the shift lever connection (20) in the neutral position (NP).

9. Power transmission device (100) according to one of the preceding claims **characterized in that** the transmission connection (40) and/or the bearing device (50) have an adapter interface for the mounting of an adapter for a geometrical adaptation to a specific vehicle.

10. Power transmission device (100) according to one of the preceding claims, **characterized in that** the sensor device (60) has at least one detection means (62), which is arranged in a stationary manner with respect to the shift lever connection (20), and a sensor means (64), which is arranged in a stationary manner with respect to the transmission connection (40).

11. Power transmission device (100) according to one of the preceding claims, **characterized in that** the sensor device (60) is designed to transmit the detected relative movement by wireless communication.

12. Power transmission device (100) according to one of the preceding claims, **characterized in that** the shift lever connection (20) is designed to be foldable relative to the shift lever (30) in a direction different from the possible relative movement to the transmission connection (40).

13. Power transmission device (100) according to one of the preceding claims **characterized in that** the energy store (32) has a torsion bar (70) with a shift end (72) with a shift stop (72a) and a transmission end (74) with a transmission stop (74a), wherein the shift lever connection (20) comprises a first shift lever connection guide (26a) for the shift stop (72a) and a second shift lever connection guide (26b) for the transmission stop (74a) and the transmission connection (40) comprises a first transmission connection guide (46a) for the shift stop (72a) and a second transmission connection guide (46b) for the transmission stop (74a).

14. Power transmission device (100) according to claim 13, **characterized in that** the torsion bar (70) has a mounting interface (76) at the shift end (72) and/or at the transmission end (74) for the introduction of a torsional force into the torsion bar (70).

15. Power transmission device (100) according to one of claims 13 or 14, **characterized in that** the angular position of the shift stop (72a) to the transmission stop (74a) is designed to be variable.

16. Power transmission device (100) according to one of claims 13 or 14, **characterized in that** the shift device (10) and/or the sensor device (60) has a protective device (90) against the impairment of the sensor device (60) by manual mechanical influence.

17. Method of mounting the power transmission device (100) having the characteristics of any one of claims 1 to 16, comprising the following steps:
- providing the shift lever connection (20), the shift lever (30) and the transmission connection (40),
- mounting the energy store (32) to the transmission connection (40),
- charging the energy store (32) with a pretensioning force,
- mounting the energy store (32) charged with the pretensioning force with the shift lever connection (20).

## Revendications

1. Dispositif de transmission de force (100) pour une transmission, en particulier d'un motocycle, avec un système d'assistance au changement, comprenant un dispositif de levier de changement (10) avec un dispositif de palier (50) pour le montage mobile sur un véhicule, le dispositif de levier de changement (10) ayant une connexion de levier de changement (20) pour recevoir une force de changement, un levier de changement (30) s'étendant le long d'un deuxième axe longitudinal (34) pour transmettre la force de changement et une connexion de transmission (40) pour délivrer la force de changement à la transmission, dans lequel le levier de changement (30) comprend un accumulateur de force (32) pour stocker temporairement au moins une partie de la force de changement, de sorte qu'un mouvement relatif entre la connexion de levier de changement (20) et la connexion de transmission (40) peut avoir lieu en modifiant la force de changement stockée dans l'accumulateur de force (32), dans lequel le dispositif de levier de changement (10) a un dispositif de capteur (60) pour détecter le mouvement relatif entre la connexion de levier de changement (20) et la connexion de transmission (40), **caractérisé en ce que** l'accumulateur de force (32) est formé comme un accumulateur de force rotatif (32) sur le deuxième axe longitudinal (34), et la connexion de levier de changement (20) est formée pour un mouvement relatif rotatif à la connexion de transmission (40).

2. Dispositif de transmission de force (100) selon l'une des revendications précédentes, **caractérisé en ce que** la connexion de levier de changement (20) est conçue comme une pédale.

3. Dispositif de transmission de force (100) selon l'une des revendications précédentes, **caractérisé en ce que** l'accumulateur de force (32) est conçu sous la forme d'un élément de ressort rotatif.

4. Dispositif de transmission de force (100) selon l'une des revendications précédentes, **caractérisé en ce que** la connexion de transmission (40) comprend le dispositif de palier (50).

5. Dispositif de transmission de force (100) selon l'une des revendications précédentes, **caractérisé en ce que** la connexion de levier de changement (20) a un premier axe longitudinal (24), le levier de changement (30) a ledit deuxième axe longitudinal (34) et la connexion de transmission (40) a un troisième axe longitudinal (44), le premier axe longitudinal (24) définissant un plan pour toutes les positions relatives de la connexion de levier de changement (20) par rapport à la connexion de transmission (40), qui est orienté parallèlement ou sensiblement parallèlement au troisième axe longitudinal (44).

6. Dispositif de transmission de force (100) selon la revendication 5, **caractérisé en ce que** le mouvement relatif de la connexion de levier de changement (20) est conçu comme un mouvement de rotation, en particulier autour du deuxième axe longitudinal (34), dans lequel, entre une position neutre (NP) de la connexion de levier de changement (20) et une position de changement (SP) de la connexion de levier de changement (20), un angle de changement (α) entre les alignements du premier axe longitudinal (24) dans ces deux positions résultant.

7. Dispositif de transmission de force (100) selon l'une des revendications précédentes, **caractérisé en ce que** la connexion de levier de changement (20) présente au moins une surface de changement (22) pour le contact du conducteur du véhicule, la surface de changement (22) ayant un contour de surface (22a) sous la forme d'une courbure qui est en corrélation avec le mouvement relatif de la connexion de levier de changement (20) par rapport à la connexion de transmission (40).

8. Dispositif de transmission de force (100) selon l'une des revendications précédentes, **caractérisé en ce que** la connexion de levier de changement (20) est conçue pour un mouvement relatif par rapport à la connexion de transmission (40) d'une position neutre (NP) dans au moins une position de changement (SP), de préférence l'accumulateur de force (32) exerçant une force de prétension sur la connexion de levier de changement (20) dans la position neutre (NP).

9. Dispositif de transmission de force (100) selon l'une des revendications précédentes, **caractérisé en ce que** la connexion de transmission (40) et/ou le dispositif de palier (50) présentent une interface d'adaptation pour la fixation d'un adaptateur pour l'adaptation géométrique à un véhicule spécifique.

10. Dispositif de transmission de force (100) selon l'une des revendications précédentes, **caractérisé en ce que** le dispositif de capteur (60) présente au moins un moyen de détection (62), qui est disposé de manière fixe par rapport à la connexion de levier de changement (20), et un moyen de capteur (64), qui est disposé de manière fixe par rapport à la connexion de transmission (40).

11. Dispositif de transmission de force (100) selon l'une des revendications précédentes, **caractérisé en ce que** le dispositif de capteur (60) est conçu pour transmettre le mouvement relatif détecté par communication sans fil.

12. Dispositif de transmission de force (100) selon l'une des revendications précédentes, **caractérisé en ce que** la connexion de levier de changement (20) est conçue pour être pliable par rapport au levier de changement (30) dans une direction différente du mouvement relatif possible à la connexion de transmission (40).

13. Dispositif de transmission de force (100) selon l'une des revendications précédentes, **caractérisé en ce que** l'accumulateur de force (32) comporte une barre de torsion (70) avec une extrémité de changement (72) avec un arrêt de changement (72a) et une extrémité de transmission (74) avec un arrêt de transmission (74a), la connexion de levier de changement (20) comprend un premier guide de connexion de levier de changement (26a) pour l'arrêt de changement (72a) et un deuxième guide de connexion de levier de changement (26b) pour l'arrêt de transmission (74a) et la connexion de transmission (40) comprend un premier guide de connexion de transmission (46a) pour l'arrêt de changement (72a) et un deuxième guide de connexion de transmission (46b) pour l'arrêt de transmission (74a).

14. Dispositif de transmission de force (100) selon la revendication 13, **caractérisé en ce que** la barre de torsion (70) présente une interface de montage (76) à l'extrémité de changement (72) et/ou à l'extrémité de transmission (74) pour l'introduction d'une force de torsion dans la barre de torsion (70).

15. Dispositif de transmission de force (100) selon l'une des revendications 13 ou 14, **caractérisé en ce que** la position angulaire de l'arrêt de changement (72a) par rapport à l'arrêt de transmission (74a) est conçue pour être variable.

16. Dispositif de transmission de force (100) selon l'une des revendications 13 ou 14, **caractérisé en ce que** le dispositif de changement (10) et/ou le dispositif de capteur (60) comporte un dispositif de protection (90) contre la détérioration du dispositif de capteur (60) par une influence mécanique manuelle.

17. Procédé d'assemblage du dispositif de transmission de force (100) ayant les caractéristiques de l'une quelconque des revendications 1 à 16, comprenant les étapes suivantes :
- Prévoir la connexion de levier de changement (20), le levier de changement (30) et la connexion de transmission (40),
- Fixez l'accumulateur de force (32) au connexion de transmission (40),
- Charger l'accumulateur de force (32) avec une force de prétension,
- Fixez l'accumulateur de force (32) chargé de la force de prétension avec la connexion de levier de changement (20).
